## Europäisches Patentamt
## European Patent Office
## Office européen des brevets

(11) Publication number: **0 295 197**
**A1**

(12) **EUROPEAN PATENT APPLICATION**

(21) Application number: **88630111.8**

(22) Date of filing: **09.06.88**

(51) Int. Cl.⁴: **H 02 M 3/335**
**G 05 F 1/577**

(30) Priority: **11.06.87 US 60691**

(43) Date of publication of application:
**14.12.88 Bulletin 88/50**

(84) Designated Contracting States: **DE FR GB IT**

(71) Applicant: **UNITED TECHNOLOGIES CORPORATION**
**United Technologies Building 1, Financial Plaza**
**Hartford, CT 06101 (US)**

(72) Inventor: **Salerno, David Charles**
**238 Marsh Road**
**Bristol Connecticut 06010 (US)**

(74) Representative: **Waxweiler, Jean et al**
**OFFICE DENNEMEYER S.à.r.l. P.O. Box 1502**
**L-1015 Luxembourg (LU)**

(54) **Power supply start-up circuit.**

(57) A method and apparatus for initially energizing a power supply's control logic are disclosed. A capacitor is charged, a signal indicative of the magnitude of the charge in the capacitor is compared to a reference signal, and the capacitor signal is presented to the control logic after the capacitor signal magnitude equals or exceeds the reference signal magnitude, thereby energizing the control logic until the power supply itself can sustain the control logic.

FIG. 1

EP 0 295 197 A1

## Description

### Power Supply Start-Up Circuit

**Technical Field**

The invention relates to a power supply circuit, more specifically to a start-up circuit used to initially energize the power supply's control logic.

**Background Art**

Like other electrical circuits, power supply circuits need a low voltage DC power source for their control logic and drive circuitry. This voltage is often derived from an isolated output transformer winding which provides a well regulated voltage which can also be used for feedback to the control logic. However, a start-up supply is required to get the control logic running before this voltage can be generated.

In the case of the power supply which operates from an AC power line, a step down transformer start-up circuit is used and well known in the art. This circuit has an AC power line on the primary side of the step down transformer, a rectifier on each tap of the step down transformer's secondary and a filtering capacitor to ground between the rectifiers and the output signal to the control logic. The shortcomings, however, of the step down transformer start-up system are numerous. First, the step down transformer and the filter capacitor are both physically large in size and require a large amount of "real estate" on any circuit board because the AC line frequency is low, usually either 60 or 400 hertz. Second, it is physically impossible to adjust the step down transformer's output voltage to the control logic without physically removing and reinstalling a new step down transformer. Lastly, the output voltage from the secondary to the control logic is unregulated.

In the case of a power supply which operates from a DC power line, a linear regulator is used and well known in the art. This circuit has DC power attached to the collector of a transistor, a resistor running from the DC power source to the base of the transistor, a zener diode attached to the base of the transistor and running to ground, and the output voltage to the control logic taken from the emitter of the transistor. Although having a regulated output and being small in size, the linear regulator start-up circuit does have a major shortcoming, i.e., a disastrous failure mode if the transistor shorts. If the transistor does short, the entire DC voltage appears as the input voltage to the control logic, and destroys the entire circuitry for the control logic.

**Disclosure of the Invention**

An object of the present invention is to provide a start-up circuit for a power supply which is small in volume and area.

Another object of the present invention is to provide a start-up circuit for a power supply which is frequency independent.

Still another object of the present invention is to provide a start-up circuit for a power supply which is immune to input line variations and noise.

Still another object of the present invention is to provide a start-up circuit for a power supply which induces a regulated output to the control logic.

Still another object of the present invention is to provide a start-up circuit for a power supply that dissipates little power.

According to the present invention, a capacitor in a power supply's control logic is charged and a signal indicative of the magnitude of the charge in the capacitor is compared to a reference signal. When the capacitor signal magnitude equals or exceeds the reference signal magnitude, the capacitor signal is presented to the control logic, thereby energizing the control logic until the power supply itself can sustain the control logic.

In still further accord with the present invention, the capacitor within the control logic is charged from a DC signal. When the capacitor signal magnitude stored on the capacitor equals or exceeds a zener reference signal magnitude then the capacitor signal is switched from the capacitor to the control logic thereby energizing the control logic until the power supply itself can sustain the control logic.

The present invention represents a sizeable and substantial improvement over previous power supply control logic designs in several important areas. First, the present invention is physically small both in size and in volume and requires only a small amount of "real estate" on a circuit. The present invention uses only semi-conductor devices, resistors, and only one capacitor whereas the step down transformer start-up circuit has a bulky and large transformer and a filtering capacitor. Second, the present invention has no catastrophic failure modes. The failure of an element in the present invention, i.e., a short, will only prevent the generating of the output voltage to the control logic which is much less catastrophic than the linear regulator start-up circuit's failure mode which places the entire DC voltage on the output. Third, the magnitude of the output voltage in the present invention can easily be changed by merely replacing the zener diode with a diode having the correct start-up voltage. Fourth, the present invention's output voltage is frequency independent from the input voltage. Fifth, the present invention's output voltage is immune to input voltage variations and transients. Input voltage variations and transients in the present invention only increase the time period necessary to provide an output voltage. This is unlike the transformer in the step down transformer start-up circuit which is affected by both input voltage variations and transients. Finally, the present invention dissipates only a small amount of power, usually in the order of only a half a watt.

These and other objects, features and advantages of the present invention will become more apparent in light of the detailed description of a best mode embodiment thereof, as illustrated in the accompanying drawing.

## Brief Description of the Drawing

Fig. 1 is a block diagram representation of a number of circuits related to a power supply diagram which includes a start-up circuit, according to the present invention;

Fig. 2 is a conceptual representation of a start-up circuit, according to the present invention; and

Fig. 3 is a schematic diagram of a start-up circuit, according to the present invention.

## Best Mode For Carrying Out The Invention

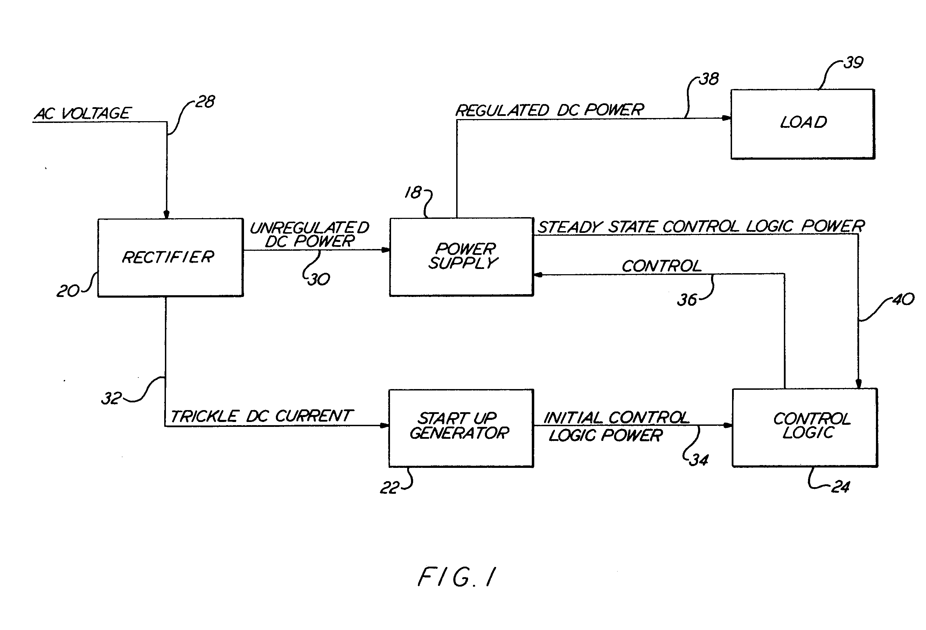

Fig. 1 is a block diagram representation of a number of circuits related to a power supply 18 including a rectifier 20, a start-up generator 22, and logic control 24. Upon receiving an AC signal on a line 28, the rectifier 20 converts the AC signal into an unregulated DC power signal on a line 30 and to a trickle DC current on a line 32. The start-up generator 22 is provided the trickle DC current on the line 32 and generates an initial control logic power signal on a line 34 and provides this signal to the control logic 24. The control logic then provides a control signal on a line 36 to the power supply 18. The power supply 18 then starts up and begins generating a regulated DC power signal on a line 38 for a load 39 and a steady state control logic power signal on a line 40 to the control logic. 24.

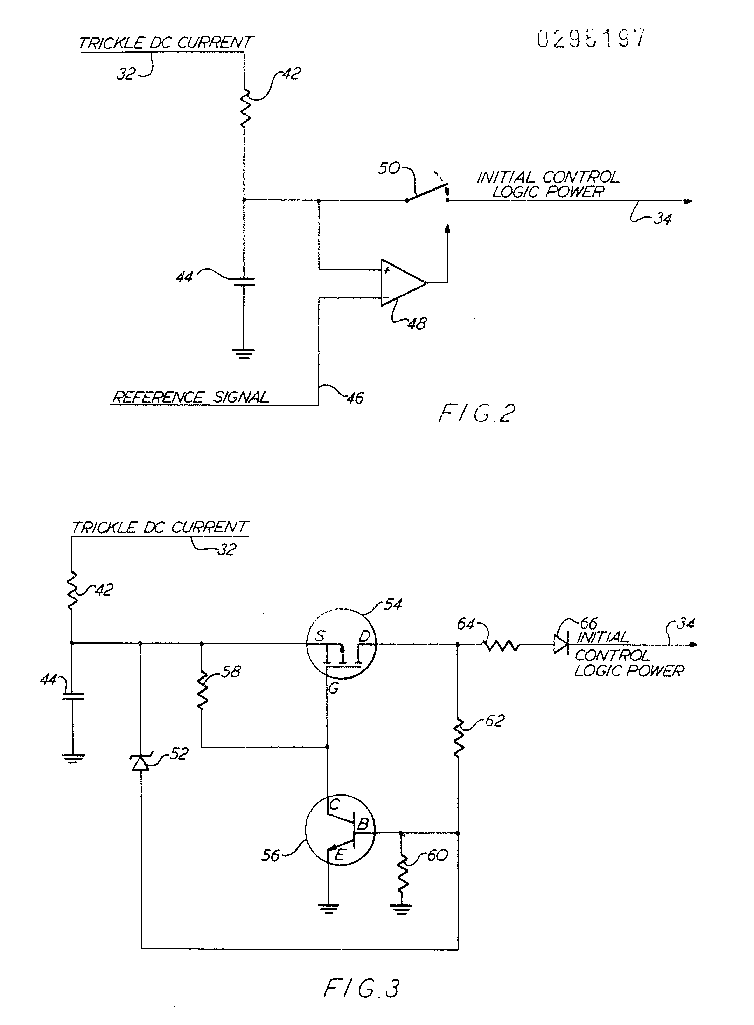

Fig. 2 is a conceptual representation of a start-up circuit according to the present invention. When the trickle DC current on the line 32 is applied, a resistor 42 trickle charges a capacitor 44 until the magnitude of the voltage across the capacitor equals the magnitude of the voltage of a reference signal on a line 46. When the magnitude of the voltage across the capacitor 44 equals the reference signal voltage on the line 46 a comparator 48 closes a switch 50 and the capacitor 44 then transfers the charge stored in the capacitor via the initial control logic power signal line 34 to the control logic 24, as in Fig. 1.

Fig. 3 is a schematic diagram of a start-up circuit, according to the present invention. The resistor 42 trickle charges the capacitor 44 until the charge stored on the capacitor 44 reaches the zener knee of a zener diode 52. Until the charge stored on the capacitor 44 reaches the zener knee of the zener diode, a metal oxide semiconductor field effect transistor (MOSFET) 54 and a transistor 56 are held off by a resistor 58 and a resistor 60, respectively. Once the zener voltage has been reached on the capacitor 44, the zener diode 52 conducts current through the base emitter junction of the transistor 56. The transistor 56 then turns on and pulls the gate of the MOSFET 54 to ground, thereby biasing the MOSFET 54 on. As the voltage on the drain of MOSFET 54 rises, positive feedback is provided by means of a resistor 62. This keeps the MOSFET 54 and the transistor 56 saturated.The charge stored in the capacitor 44 is then transferred by the MOSFET 54 to the control logic 24 of Fig. 1. During the period beginning after the control logic 24 is energized and ending when the power supply 18 provides a steady state control logic power on the line 40 to the control logic 24, a resistor 64 limits the peak current which the MOSFET 54 sees from the control logic 24. Thereafter, a diode 66 is back biased by the steady state control logic power on the line 40 so that the control logic side of the diode has a higher voltage than the start-up circuit side of the diode. In essence, the diode 66 is "open circuited" so that no current flows from the control logic 24 back into the start-up generator 22.

Although elements 54 and 56 in Fig. 3 are shown as a MOSFET and transistor respectively, one skilled in the art would understand that other types of switches could be substituted for the element 54 or 56 with only minor modifications to the circuitry shown in Fig. 3. If for example, a bipolar transistor is used instead of a MOSFET for element 54, then a resistor must be placed between the collector of the transistor 56 and at the junction of the MOSFET 54 base and the resistor.

Although the invention has been shown and described with respect to a best mode embodiment thereof, it should be understood by those skilled in the art that the foregoing and various other changes, omissions, and additions in the form and detail thereof may be made therein without departing from the spirit and scope of the invention.

## Claims

1. A method of initially energizing a power supply's control logic to provide control signals to start up the power supply and thereafter the power supply providing power for the control logic, comprising the steps of:

charging a capacitor;

comparing a capacitor signal having a magnitude indicative of the magnitude of the charge stored in said capacitor with a reference signal magnitude; and

presenting said capacitor signal to the control logic after said capacitor signal magnitude equals or exceeds said reference signal magnitude thereby energizing the control logic.

2. The method of claim 1, wherein said step of charging a capacitor comprises the step of trickle charging said capacitor from a DC signal.

3. The method of claim 1, wherein said step of comparing comprises the step of comparing said capacitor signal magnitude to a zener reference signal magnitude.

4. The method of claim 1, wherein said step of presenting comprises the step of switching said capacitor signal from said capacitor to the control logic.

5. An apparatus for initially energizing a power supply's control logic to provide control signals to start up the power supply and thereafter the power supply providing power for the control logic, comprising:

a capacitor, responsive to a charging signal for charging said capacitor;

means for comparing a capacitor signal having a magnitude indicative of the magnitude of the charge stored in said capacitor with a reference signal magnitude; and

means for presenting said capacitor signal to the control logic after said capacitor signal magnitude equals or exceeds said reference signal magnitude.

6. The apparatus of claim 5, further comprising a resistor in series with said capacitor.

7. The apparatus of claim 5, wherein said means for comparing comprises means for comparing said capacitor signal magnitude to a zener reference signal magnitude.

8. The apparatus of claim 5, wherein said means for comparing comprises means for switching said capacitor signal magnitude from said capacitor to the control logic.

AC VOLTAGE 28

RECTIFIER 20

UNREGULATED DC POWER 30

POWER SUPPLY 18

REGULATED DC POWER 38

LOAD 39

STEADY STATE CONTROL LOGIC POWER

CONTROL 36

40

TRICKLE DC CURRENT 32

START UP GENERATOR 22

INITIAL CONTROL LOGIC POWER 34

CONTROL LOGIC 24

FIG. 1

0295197

TRICKLE DC CURRENT

_32_ ⌇ 42

50 INITIAL CONTROL
LOGIC POWER
34

44 +
48 −

REFERENCE SIGNAL 46

_FIG.2_

TRICKLE DC CURRENT
32

42 54
S D
64 66 34
INITIAL
CONTROL
LOGIC POWER
44 58
G
62
52
C
B
56 E 60

_FIG.3_

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4 246 634 (ANN ARBOR TERMINALS)<br>* Whole document *<br>--- | 1-8 | H 02 M 3/335<br>G 05 F 1/577 |
| X | IBM TECHNICAL DISCLOSURE BULLETIN, vol. 13, no. 9, February 1971, pages 2763-2764, New York, US; W.A. MOORMAN: "Transistor switching regulator start circuit<br>* Whole article *<br>----- | 1-8 | |

TECHNICAL FIELDS
SEARCHED (Int. Cl.4)

H 02 M
G 05 F
H 03 K

The present search report has been drawn up for all claims

| Place of search | Date of completion of the search | Examiner |
|---|---|---|
| THE HAGUE | 19-08-1988 | SPEISER P. |